# FASCICULE DE BREVET EUROPEEN

(11) **EP 3 079 903 B1**
(45) Date de publication et mention de la délivrance du brevet: **03.03.2021**
(21) Numéro de dépôt: 14809398.2
(22) Date de dépôt: 09.12.2014
(51) Int. Cl.: B32B 17/10, F21V 33/00, B60Q 3/208, B60Q 3/80

(54) **VITRAGE AUTOMOBILE**
AUTOMOBILVERGLASUNG
AUTOMOTIVE GLAZING

(30) Priorité: 13.12.2013 BE 201300838
(43) Date de publication de la demande: 19.10.2016
(73) Titulaire: AGC Glass Europe, 1348 Louvain-La-Neuve (BE)
(72) Inventeur: LINTHOUT, Sébastien, B-1390 Archennes (BE); VIVIER, Jonathan, B-5030 Beuzet (BE)
(74) Mandataire: AGC Glass Europe
(86) Numéro de dépôt international: PCT/EP2014/077055
(87) Numéro de publication internationale: WO 2015/086599

(56) Documents cités:
- EP-A1- 1 437 215
- WO-A1-2013/189794
- DE-A1- 10 215 209
- FR-A1- 2 738 783
- GB-A- 2 489 795
- US-A1- 2005 238 857
- US-A1- 2010 179 725
- US-B1- 6 654 070

## Description

L'invention concerne les vitrages automobiles feuilletés dans lesquels sont insérés des ensembles fonctionnels alimentés électriquement, et les commandes de ces ensembles.

Parmi les ensembles fonctionnels intégrés à des vitrages automobiles il peut s'agir par exemple de moyens d'éclairage. Il peut aussi s'agir de moyens commandant des variations de propriétés optiques, ou de moyens de chauffage etc. La publication WO 2004/062908 de la demanderesse propose ainsi l'affichage d'informations par des diodes luminescentes incorporées dans un vitrage, notamment un pare-brise.

Dans la suite la description de l'invention est développée particulièrement pour ce qui concerne les moyens de commande de ces ensembles fonctionnels de type éclairage et film de modification de la transmission lumineuse. De même la description de l'invention s'attache particulièrement aux vitrages entrant dans la composition des toits automobiles sans écarter d'autres applications.

L'intégration dans le toit vitré d'ensembles fonctionnels devant être alimentés électriquement nécessite de disposer de commandes de ces alimentations. Ces commandes, de type interrupteur ou variateur, peuvent être disposées sur le tableau de bord, la console centrale ou sur les garnitures de porte, de sorte qu'elles soient facilement accessibles. Pour les commandes des moyens d'éclairage de l'habitacle elles sont le plus souvent regroupées en partie limitrophe du toit à proximité des moyens d'éclairage eux-mêmes.

Pour des raisons esthétiques mais aussi de commodité dans la localisation et aussi de simplicité de mise en œuvre, il a été proposé de faire en sorte que des moyens intégrés à des vitrages soient commandés directement à partir du vitrage lui-même. C'est en particulier le cas de la publication précitée qui envisage de façon sommaire, l'utilisation d'interrupteurs capacitifs. Dans cette publication les couches conductrices utilisées sont appliquées sur les feuilles du vitrage lui-même. Il s'agit d'utiliser des couches qui ont une fonction principale, par exemple dans le cas de pare-brise, des couches servant de filtre infrarouges.

L'alimentation électrique d'éléments fonctionnels inclus dans un vitrage à partir d'une couche conductrice recouvrant l'ensemble d'un vitrage n'est qu'un cas particulier et n'est pas généralisable. Dans certains cas une telle disposition est même contraire à la mise en œuvre de ces ensembles. Pour faire en sorte que la commande des ensembles fonctionnels s'applique pratiquement à toutes les dispositions, notamment celles comportant dans un même vitrage un ou plusieurs ensembles fonctionnels alimentés électriquement, l'invention propose la mise en œuvre de moyens de commande de ces ensembles à partir de capteurs insérés dans le vitrage sur un support autre que les feuilles de verre composant le vitrage. Les capteurs utilisés pour ces commandes sont de type capacitif et sont constitués dans des couches conductrices appliquées sur ce support. Le capteur est associé à un ensemble de traitement des signaux reçus du capteur en question.

Le support et les éléments conducteurs formant le capteur, sont insérés dans le vitrage entre les feuilles de verre. Ils sont de matériaux essentiellement transparents pour ne pas rompre de façon significative l'aspect visuel du vitrage. De façon préférée le support et le capteur, constitué dans des couches conductrices appliquées sur ce support, sont choisis de sorte qu'ils présentent une transmission lumineuse déterminée selon la norme EN 410 qui n'est pas inférieure à 80% et de préférence pas inférieure à 85%.

L'introduction des moyens de commande constitués sous forme d'interrupteur capacitif sur un support permet de limiter les dimensions à ce qui est nécessaire et qui ne concerne qu'une petite partie de la surface du vitrage. Ceci constitue un avantage certain dans l'assemblage des différents constituants du vitrage. Un autre avantage est éventuellement dans la possibilité de choisir de façon la plus appropriée les caractéristiques autres que dimensionnelles propres au support et au capteur, notamment les matériaux qui les constituent. Les dimensions limitées ont encore pour avantage de faciliter le choix de la localisation de ces éléments dans le vitrage. Les dimensions limitées rendent plus discrète leur présence dans le vitrage, dans la mesure où, même essentiellement transparents, ils s'accompagnent d'une modification locale des aspects optiques aussi modeste soit cette modification.

Les supports utilisés pour les capteurs capacitifs doivent s'insérer aisément dans le vitrage. Ils sont de préférence d'épaisseur aussi faible que le permet leur fonction. Si le support ne comporte que le capteur, un film souple par exemple de PET, revêtu des couches conductrices peut être utilisé. Dans ce cas l'épaisseur peut être particulièrement faible, de quelques centièmes de millimètres. Pour des supports comportant d'autres moyens fonctionnels, une certaine rigidité peut être préférée. Dans ce cas, outre les supports en matériau organique, des lames de verre de quelques dixièmes de millimètres d'épaisseur sont avantageusement utilisées.

Les moyens de commande selon l'invention offrent aussi avantageusement des compositions qui garantissent un fonctionnement amélioré en termes de sensibilité et de fiabilité dans un environnement qui peut développer des signaux parasites importants. La combinaison d'ensembles fonctionnels différents dans un même vitrage, tous alimentés électriquement, engendre inévitablement des champs qui peuvent perturber le fonctionnement du capteur capacitif. Pour écarter ou au moins minimiser ces influences parasites, le capteur capacitif est avantageusement construit de manière à opérer une discrimination accrue des signaux émis par le capteur. A cet effet le capteur comprend un ensemble de deux électrodes situées au voisinage l'une de l'autre. Le fonctionnement de cet ensemble est détaillé dans la suite de la description.

Pour éviter que la mise en place d'éléments multiples, notamment des conducteurs reliant le capteur à une unité de traitement située hors du vitrage, ne complique la structure et l'assemblage du vitrage, ces conducteurs sont avantageusement constitués dans la même couche que celle des électrodes, et offrent aussi de ce fait la même transparence. Eventuellement d'autres conducteurs peuvent aussi être utilisés , notamment des fils de très petit diamètre et par suite peu discernables. Mais la préférence, pour les raisons indiquées se porte sur les conducteurs constitués dans la couche conductrice.

Comme souligné précédemment le support du capteur est avantageusement de dimensions limitées par rapport à celles du vitrage. Les électrodes du capteur lui-même, sont dimensionnées en fonction du mode de mise en œuvre. Celui-ci consiste pour l'opérateur à approcher le plus possible la main ou même un doigt comme pour un interrupteur mécanique. Dans le cas du capteur capacitif, la modification du champ à l'approche des électrodes suffit à changer les caractéristiques de leur capacité. Les modifications introduites sont fonction de la configuration du capteur et notamment de ses dimensions. Les électrodes sur leur support ne recouvrent de préférence qu'une surface qui n'est pas supérieure à 0,5dm², et de préférence pas supérieure à 0,25dm². Ces dimensions conduisent à des variations de capacité limitées. Le mode de traitement des signaux correspondant doit en conséquence tenir compte de ces modifications de faible ampleur. En particulier il est nécessaire de choisir un traitement qui permette de faire abstraction de tout ce qui peut altérer le bon fonctionnement du capteur.

Des modifications parasites peuvent provenir d'éléments extérieurs au vitrage notamment des divers ensembles électroniques embarqués dans le véhicule. Ils peuvent aussi provenir du vitrage lui-même, ou encore de la structure du capteur lui-même ou des éléments qui lui sont associés. Dans la mesure où les conducteurs sont également sensibles à des modifications du champ électrique, dans le mode comprenant deux électrodes on s'efforce d'écarter les conducteurs l'un de l'autre pour que les modifications de leur capacité ne perturbent pas la mesure. La fixation de seuils suffisants pour le signal tient compte de ces possibles parasites.

La fixation des seuils de déclenchement est l'objet d'un compromis nécessaire. Un seuil bas conduit au risque de déclenchement inapproprié. Un seuil très élevé peut rendre difficile le déclenchement voulu. Pour cette raison, selon l'invention il est préféré d'opérer avec plusieurs électrodes pour le même capteur. Pour conduire au déclenchement , le seuil fixé pour chaque signal doit être franchi. Le risque est minimisé d'un parasite opérant quasi simultanément sur chacun des signaux émis par chaque électrode. Ceci permet de choisir des seuils qui ne sont pas trop élevés, et dans tous les cas sensiblement moins élevés qu'avec une seule électrode et un seul signal.

Comme indiqué ci-dessus, les électrodes ne couvrent qu'une surface limitée. Pour faire en sorte que la modification du champ électrique soit aussi voisine que possible pour chaque électrode, elles sont dans une position aussi proche que possible l'une de l'autre. Pour satisfaire à ces conditions, il est préféré selon l'invention, sans accroître leur surface, de les entrelacer dans un assemblage compact.

Outre le fait d'utiliser plusieurs électrodes, la fréquence de détermination des modifications de capacité des électrodes permet d'ajoouter àla discrimination entre signaux. De préférence plusieurs signaux consécutifs dans le temps sont choisis pour la reconnaissance d'une modification voulue par l'opérateur. On écarte ainsi les possibles parasites de fréquence élevée liés à d'autres composants proches du capteur. A l'inverse, le déclenchement est ainsi de préférence effectif lorsque le seuil de déclenchement est constaté sur de temps en rapport avec le mode d'intervention de l'opérateur. Des fréquences de l'ordre de de quelques Hertz à quelques dizaines de Hertz conviennent bien pour la mise en œuvre de l'invention. Par exemple de 1Hz à 100Hz et de préférence de 10Hz à 50Hz.

Par ailleurs il est avantageux de faire en sorte que la détermination de capacité ne soit pas faite de façon parfaitement régulière dans le temps. Cette détermination est de façon préférée effectuée selon le mode désigné sous le nom de «Pseudo Random Sequence» (PRS). Ceci permet d'exclure de possibles «résonance » entre des signaux parasites et ceux commandant effectivement l'interrupteur.

La modification du champ électrique peut provenir des deux côtés du vitrage. Dans la mesure où le déclenchement ne devrait intervenir que d'un côté, il convient d'interposer un élément conducteur faisant écran à ces modifications de champ non souhaitées. L'influence sur le champ électrique ne se limitant pas à la présence d'un élément faisant strictement face au capteur, il est préférable que l'écran s'étende au-delà de cette la surface. En pratique comme les exemples en font état plus loin, les constituants du vitrage conduisent souvent à la présence d'écrans ayant une autre fonction, et ces écrans s'étendent sur des surfaces beaucoup plus grandes que celle des capteurs. Ces écrans sont eux aussi essentiellement transparents. Ils sont constitués de systèmes de couches minces conductrices bien connues, soit comportant une ou plusieurs couches métalliques, soit ce sont des couches d'oxydes conducteurs de type TCO (thin conductive oxides).

Par ailleurs il peut être souhaité que la modification du champ électrique ne soit détectée que sur une localisation très précise en face du capteur. Un écran comportant une fenêtre comportant une «fenêtre» peut alors être disposé du côté même d'où doit provenir la modification. Un tel écran peut notamment revêtir la forme d'une couche conductrice disposée sur la feuille de verre tournée vers l'intérieur de l'habitacle.

La protection contre les influences parasites peut avantageusement être améliorée en disposant à la périphérie de la couche conductrice dans laquelle le capteur est constitué, une zone distincte du capteur et reliée à la masse.

L'incorporation dans le vitrage du capteur, comme indiqué précédemment est de préférence aussi discrète que possible, ce qui est obtenu en utilisant un support et des couches conductrices essentiellement transparentes. Ces dispositions qui ont pour but de garder les qualités optiques du vitrage aussi uniformes que possible, a pour contrepartie une perception de sa localisation plus difficile pour l'utilisateur. Différents moyens sont susceptibles de faciliter cette localisation. Si l'emplacement du capteur peut être indiqué par un marquage sur le vitrage (application d'un motif émaillé, dépoli localisé..), il est préféré, toujours pour conserver le plus possible l'état de surface du vitrage, d'indiquer l'emplacement par la présence d'une diode. Cette diode de faible puissance est avantageusement portée par le support du capteur et alimentée par des conducteurs constitués dans la couche dans laquelle le capteur est lui-même constitué.

Les modalités relatives à la mise en œuvre de ce moyen de localisation du capteur, notamment la fixation de la diode et son alimentation sont analogues à celles décrites à propos des diodes d'éclairage constituant un des moyens fonctionnels particuliers envisagés selon l'invention, comme décrit ci-après.

Comme indiqué précédemment parmi les éléments fonctionnels insérés dans le vitrage selon l'invention, figurent les moyens d'éclairage. Ces moyens nécessairement de petites dimensions sont constitués de diodes électroluminescentes. Ces diodes peuvent servir à l'éclairage d'ambiance et sont alors avantageusement réparties sur la surface du vitrage. Elles peuvent aussi constituer des éléments d'éclairage plus localisés comme ceux constituants les «liseuses». Dans ce cas un faisceau lumineux concentré conduit à rassembler plusieurs diodes sur une surface limitée.

Selon un mode préféré de réalisation de l'invention, pour ces liseuses les diodes sont introduites dans le vitrage sur le support qui comporte le capteur de commande de ces diodes, et ces diodes sont alimentées par des conducteurs formés dans la couche conductrice utilisée pour constituer le capteur.

La combinaison sur un même support de l'alimentation de diodes et de la commande capacitive est en principe avantageuse dans la mesure où l'on évite la multiplicité des éléments incorporés au feuilleté, et qu'on peut de ce fait minimiser l'épaisseur totale du vitrage. Mais ceci ne peut être obtenu qu'au prix de dispositions spécifiques concernant le support lui-même et les propriétés des couches conductrices.

Le support des diodes doit être stable dimensionnellement pour la commodité d'assemblage. Les films de type poly-téréphtalate (PET) peuvent servir de support mais en raison de leur grande souplesse ils peuvent être délicats à maintenir parfaitement plats lors de l'assemblage du vitrage feuilleté. Pour cette raison, l'utilisation d'un support de souplesse réduite est préférée. Néanmoins le support doit être suffisamment flexible pour pouvoir s'insérer dans un vitrage qui, en pratique, est toujours plus ou moins courbé.

L'utilisation de feuilles de verre très peu épaisses présente à la fois une commodité de flexion mais aussi une rigidité facilitant la mise en place. Pour les supports en verre on utilise de préférence une feuille trempée. L'épaisseur est de préférence inférieure à 0,8mm et de façon encore plus avantageuse, l'épaisseur est inférieure à 0,5mm voire inférieure à 0,4mm. Des épaisseurs encore bien moindres sont aussi possibles. La limite inférieure de cette épaisseur est principalement commandée par la capacité de la feuille à supporter la fixation des diodes et plus encore, les efforts subis à l'assemblage des différents constituants du vitrage, assemblage qui est réalisé sous pression et à température de l'ordre de 130°C. Dans cette opération l'insertion des diodes dans les matériaux thermoplastiques intercalaires, même si ces matériaux sont ramollis par l'élévation de température, sollicite le support des diodes.

Les produits conducteurs électriques transparents utilisés selon l'invention pour constituer le capteur sont bien connus dans le domaine verrier. Ils sont constitués de couches suffisamment minces d'oxydes conducteurs, ou de couches métalliques ces dernières disposées dans des ensembles de couches diélectriques de protection.

Si les couches métalliques offrent en règle générale une meilleure conductivité que les couches d'oxydes conducteurs, la fixation des diodes sur ces couches pose des problèmes de mise en œuvre et de fiabilité. En premier ces couches, même comprises dans un ensemble de couches diélectriques destinées à les protéger, restent d'ordinaire très fragiles. Les manipulations peuvent conduire à des griffures aboutissant à la rupture de la continuité de la couche ou à des courts circuits entre les conducteurs délimités dans la même couche conductrice. La présence des couches diélectriques couvrant les couches métalliques nécessite aussi l'enlèvement délicat de ces couches protectrices superficielles pour assurer un bon contact lors de la fixation des diodes. Faute de cette élimination précise le risque de défaut de continuité électrique rend l'opération incertaine. Pour ces raisons les couches préférées sont constituées d'oxydes conducteurs, lesquelles présentent une certaine dureté, et ne comportent pas de couches de protection lesquelles accroissent les risques de défauts lors de la fixation des diodes.

Les caractéristiques des couches d'oxydes conducteurs, et en particulier leur résistance électrique, dépendent beaucoup de leur composition mais aussi des conditions dans lesquelles ces couches sont produites. La technique la plus économique consiste en un dépôt par pyrolyse gazeuse (CVD) en procédant au dépôt sur la feuille de verre au moment de sa formation en ligne. Mais ce mode n'est praticable que sur des feuilles dont l'épaisseur n'est pas compatible (environ 3mm au minimum) avec l'usage proposé par l'invention. En conséquence la préparation de ces couches utilisées est conduite en «reprise» sur des feuilles d'épaisseur limitée. La technique la plus usuelle est une technique de pulvérisation cathodique sous vide.

La formation par pulvérisation cathodique permet notamment le dépôt de couches métalliques. Mais, comme indiqué précédemment, ces couches sont peu résistantes mécaniquement, aussi on leur préfère habituellement des couches d'oxydes. Parmi les couches d'oxydes les plus conductrices, figurent en particulier les couches à base d'oxyde d'indium dopé à l'oxyde d'étain (ITO). Ces couches sous des épaisseurs répondant à la condition de transparence, permettent d'atteindre des résistances de moins de 50Ω/□ et de préférence de moins de 30Ω/□ et particulièrement inférieure à 20 Ω/□.

La résistance électrique des couches est nécessairement fonction de leur épaisseur. Une augmentation de l'épaisseur permet de réduire la résistance mais se heurte à la nécessité de conserver une bonne transparence. Pour les couches de type ITO un niveau d'absorption acceptable correspond à des couches dont l'épaisseur ne dépasse pas 300nm, et de préférence 200nm.

L'alimentation adéquate des diodes requiert un minimum de puissance qui passe par une intensité électrique appropriée, étant entendu que la tension disponible sur les véhicules particuliers est traditionnellement limitée. Les tensions appliquées sont ordinairement de l'ordre de 14v. Sous cette tension l'alimentation de diodes constituant une liseuses est par exemple de l'ordre de 20 à 40mA. La puissance pour l'alimentation des diodes s'accompagne aussi d'une part dissipée par effet Joule dans la couche. Il est souhaitable que cette dernière soit aussi faible que possible, notamment pour limiter l'échauffement qui s'ajoute à celui du aux diodes.

Quelle que soit la puissance nécessaire à l'alimentation des diodes, il est préférable de limiter la surface nécessaire pour la constitution du réseau électrique qui les alimente. Cette limitation facilite l'insertion dans le vitrage, et minimise le manque d'homogénéité introduit dans l'apparence du vitrage du fait de cette insertion. Cette limitation, dans le cas d'éclairage de type «liseuse», est aussi commandée par la nécessité de regrouper l'ensemble des diodes constituant la source lumineuse sur un espace restreint.

La présence en plus des diodes d'autres éléments connectés électriquement, et notamment la présence du capteur pour la commande d'un interrupteur capacitif de ces diodes, conduit à développer sur le même support un circuit dans lequel les conducteurs sont imbriqués de façon étroite. Le circuit est obtenu de préférence à partir d'une couche conductrice uniforme dans laquelle les conducteurs sont individualisés par l'ablation de la couche selon des lignes de séparation des différents éléments conducteurs. Cette ablation est avantageusement conduite au moyen d'un faisceau laser en raison de la précision que ce mode permet d'atteindre par comparaison notamment avec des méthodes mécaniques.

La précision de la séparation des différents conducteurs disposés sur le même support obtenu par ce mode d'ablation, fait que les traits de séparation peuvent être de très petite largeur sans risque de courts circuits ultérieurs. La faible largeur de ces traits de séparation contribue aussi à l'homogénéité optique apparente de ce support. En pratique des traits de séparation peuvent être de l'ordre de quelques dizaines de microns, notamment 100µ ou moins, notamment de l'ordre de 50µ. Le cas échéant un double trait peut remplacer le trait unique pour la commodité de l'opération d'ablation exécutée de façon d'autant plus rapide que le trait d'ablation est plus étroit.

Le choix de la largeur des traits de séparation doit garantir une isolation d'au moins 10MΩ, et de préférence d'au moins 100MΩ.

Les vitrages de toits comportent aussi avantageusement des ensembles fonctionnels alimentés électriquement permettant de faire varier la transmission lumineuse tels que les films électro-chromes, les films SPD (suspended particles device) ou à cristaux liquides (LC). Ces ensembles sont aussi avantageusement commandés par des capteurs capacitifs inclus dans le vitrage selon l'invention. Normalement ces films sont introduits dans le vitrage indépendamment du support du capteur qui sert à leur commande.

De manière générale les films en question comportent des éléments conducteurs qui s'étendent sur toute leur surface. Ces conducteurs constituent donc des écrans pour les capteurs capacitifs présents dans le vitrage. Ceci impose l'ordre dans lequel ces éléments se situent les uns par rapport aux autres dans l'épaisseur du vitrage lorsqu'ils sont superposés. Lorsque dans ces films un des éléments conducteurs est mis à la masse, il est préféré de choisir celui qui est le plus voisin du capteur capacitif pour éviter les influences parasites de l'alimentation du film.

Ces films modifiant la transmission lumineuse sont par ailleurs sensibles à la température. Des systèmes de couches réfléchissant les infrarouges sont utilisés pour les protéger. Ces systèmes les plus efficaces comportent des couches métalliques minces qui forment également écran vis-à-vis des modifications de champ électrique en provenance de l'extérieur du véhicule.

De manière générale, dans la préparation des vitrages selon l'invention il convient de considérer les capacités des éléments constitutifs à supporter les traitements qui conduisent à la mise en forme et à l'assemblage du vitrage. Les toits des véhicules présentent des courbures relativement peu accentuées à l'exception éventuellement de celles des bords de ces vitrages. Tous les constituants compris dans ces vitrages doivent pouvoir supporter ces courbures, d'où la nécessité d'utiliser des supports des capteurs suffisamment flexibles. Par ailleurs lorsque les supports selon l'invention présentent une épaisseur non négligeable -c'est le cas pour les supports constitués d'une feuille de verre- pour faciliter l'assemblage, il est préférable de disposer ces supports dans un logement correspondant pratiqué dans une feuille intercalaire d'épaisseur analogue constituant ainsi une sorte de cadre pour le support.

L'invention est décrite de manière détaillée dans la suite en se référant aux exemples illustrés par les planches de dessins dans lesquelles :
- la figure 1 présente en perspective éclatée, des éléments d'un vitrage selon l'invention dont l'ensemble fonctionnel est constitué par un insert d'éclairage localisé;
- la figure 2 est une en coupe selon l'axe A-A de la figure 1, une fois les éléments constitutifs assemblés ;
- la figure 3 montre un dessin de circuit d'alimentation des diodes et des électrodes du capteur capacitif associé ;
- la figure 4 est une représentation schématique en coupe d'une alimentation de diodes d'éclairage ;
- la figure 5 analogue à la figure 1, représente un vitrage comportant comme ensemble fonctionnel un film commandant la transmission lumineuse ;
- la figure 6 est analogue à la figure 2, et représente schématiquement le vitrage après assemblage des éléments constitutifs.

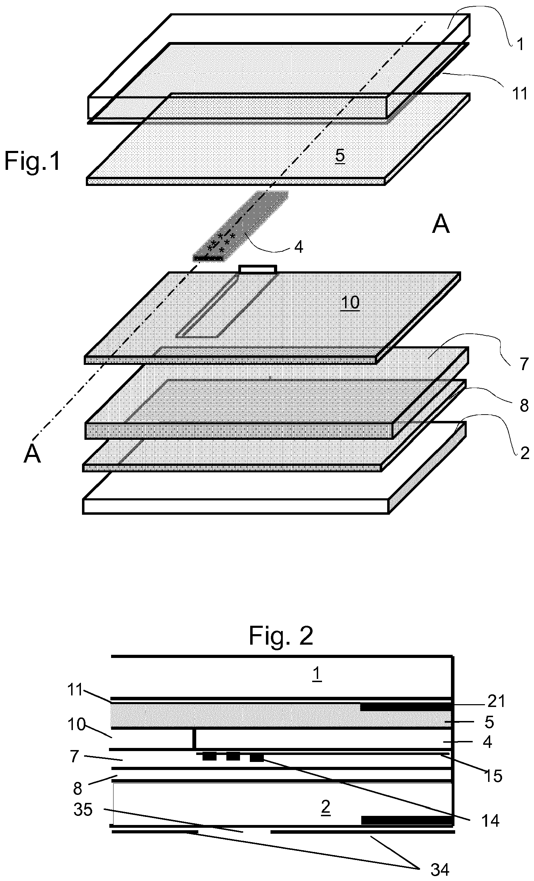

La figure 1 ne montre pas les courbures des feuilles par souci de clarté. Dans la pratique les toits, vitrés ou non, présentent des courbures lesquelles sont ordinairement plus accentuées sur les bords à l'endroit de la fixation à la carrosserie pour un accostage choisi pour son «design», l'aérodynamique et l'aspect «flush» correspondant à une bonne continuité de surface entre les éléments contigus.

Le vitrage comprend deux feuilles de verre 1 et 2. Les feuilles présentées sont de verre clair, mais elles peuvent être teintées éventuellement très fortement au moins pour l'une d'entre elles, lorsque, s'agissant d'un toit automobile, il convient de réduire les transmissions lumineuse et énergétique. Des feuilles intercalaires traditionnelles 5, 7, 8 et 10 assurent l'assemblage du vitrage. La feuille 5 est représentée fortement colorée. Une telle feuille a pour but par exemple, comme les feuilles de verre, de régler les transmissions lumineuse et énergétique.

Le vitrage comporte un support 4. Pour faciliter l'insertion de ce support, constitué par exemple d'une lame de verre de 0,4mm d'épaisseur, l'intercalaire 10 comporte un logement dont les dimensions et l'épaisseur sont celles du support.

L'insertion des supports se fait de façon privilégiée à partir des bords de ces vitrages. En d'autres termes les supports en question sont disposés dans les parties du vitrage comportant les courbures les plus accentuées. Pour cette raison les supports en question 4 doivent nécessairement présenter une certaine flexibilité pour suivre les courbures qui lui sont imposées dans l'assemblage.

En pratique la courbure du vitrage est celle qu'imposent les feuilles de verre 1 et 2. Le plus couramment les deux feuilles de verre sont de courbure aussi voisine que possible pour un assemblage qui n'introduit pas de contraintes dans ces feuilles.

A la figure 1, les feuilles de verre sont présentées sans les motifs émaillés qui traditionnellement sont utilisés pour masquer les bords des vitrages. Des émaux de ce type sont par exemple disposés sur la face interne de la feuille 1, donc en position 2, dissimulant l'ensemble des collages et connexions localisés au bord du vitrage. Les émaux de masquage peuvent aussi être en position 4, autrement dit sur la face du vitrage exposée à l'intérieur de l'habitacle. Mais dans cette position, pour une observation de l'extérieur du véhicule, ils ne masquent pas les éléments inclus dans le feuilleté. Il est aussi possible de disposer les masquages en position 2 et en position 4.

En 4 est représenté de manière très schématique ce qui correspond au support du capteur et, dans le cas de cette figure, le support est aussi celui de l'ensemble fonctionnel constitué par des diodes 14. A cet élément 4 est associée une couche conductrice 15 transparente représentée en figure 2. Cette couche est avantageusement composée d'oxyde conducteur par exemple d'ITO.

Dans le mode représenté aux figures 1 et 2, un ensemble de couches minces 11 de type anti solaire est appliqué sur la feuille de verre 1. Ces couches constituent un filtre sélectif des infrarouges. Ces filtres sont largement utilisés dans le domaine verrier. Ils sont généralement constitués de couches métalliques suffisamment minces pour être pratiquement transparentes. Dans ces filtres les couches métalliques sont associées à des couches diélectriques également minces et transparentes qui donnent à l'ensemble la sélectivité recherchée. Le plus souvent, pour améliorer cette sélectivité, qui s'accompagne de réflexion que l'on s'efforce de rendre aussi neutre que possible, les filtres comportent une pluralité de couches métalliques lesquelles sont traditionnellement à base d'argent.

Les couches filtrant les infrarouges sont soit appliquées sur la feuille de verre externe 1 comme illustré aux figures 1 et 2, soit introduites par le biais d'une feuille polymère intercalaire, notamment du type PET sur laquelle les couches sont préalablement déposées. L'utilisation d'un film support permet de ne pas soumettre les couches fragiles à des températures importantes correspondant à l'étape de bombage de feuilles de verre, l'introduction de ces couches avec le film PET n'intervenant que pour l'assemblage à l'étuve.

Le choix du système de couches est avantageusement celui de systèmes à plusieurs couches d'argent pour obtenir un filtre efficace et qui permette le contrôle de la coloration notamment en réflexion. Un ensemble de couches particulièrement efficace est tel que décrit dans la demande WO2011/147875. Dans cette demande le système préconisé comporte trois couches d'argent et des couches diélectriques, l'ensemble étant choisi, notamment les épaisseurs des couches d'argent, de telle sorte que la coloration en réflexion soit satisfaisante même sous de faibles incidences d'observation.

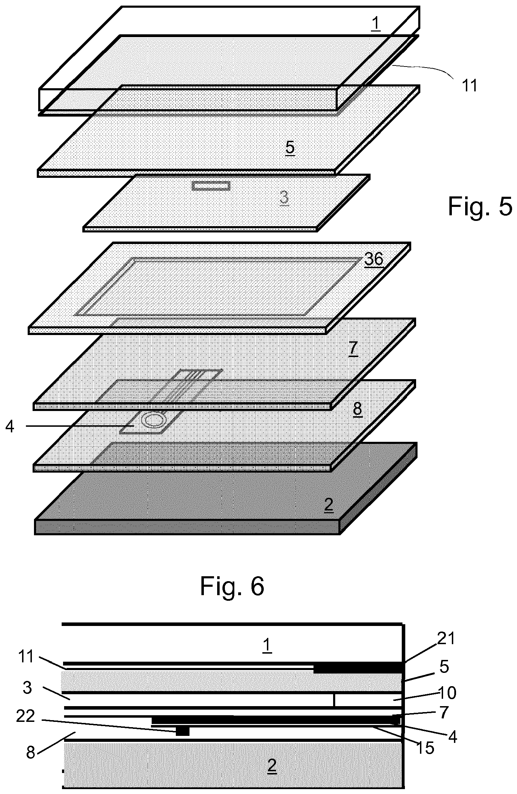

La présence de ces couches conductrices métalliques constitue un écran électromagnétique qui protège les capteurs capacitifs du vitrage contre les incidences extérieures. Cette protection peut résulter également de tout élément conducteur disposé au-dessus des capteurs. De tels éléments sont soit introduits dans ce seul but, soit de préférence correspondent à des moyens fonctionnels additionnels comportant des couches conductrices. Il peut s'agir notamment de couches chauffantes. Il peut s'agir aussi par exemple des films modifiant les propriétés optiques par application d'un champ électrique tels que les films dits SPD (suspended particles devices), les films à cristaux liquides (LC), les films électro-chromes. De tels ensembles font l'objet d'une description à propos des figures 5 et 6.

La figure 2 présente de façon schématique, un vitrage comportant les éléments de la figure 1 après assemblage de ses différents constituants. Les dimensions relatives ne sont pas respectées pour faciliter la compréhension.

Des bandes d'émail 21 sont représentées sur le bord du vitrage. Ces bandes émaillées sont appliquées par des techniques de sérigraphie sur les feuilles de verre préalablement recouvertes des couches 11. Les bandes d'émail sont disposées de telle sorte qu'elles couvrent et masquent les extrémités du support 4, extrémités qui sont l'emplacement des éléments permettant la connexion des différents circuits électriques du support 4 avec les moyens de traitement des électrodes du capteur et d'alimentation des diodes, ceux-ci non représentés. Comme représenté à la figure 2 les bandes émaillées peuvent être appliquées sur chacune des feuilles de verre pour servir de masque aussi bien à la vue de l'extérieur que de l'intérieur.

L'ajustement de la feuille intercalaire 10 et du support 4 ne tient pas compte de la surépaisseur correspondant aux diodes 14. Celles-ci sont de très petites dimensions. Leur insertion est simplement obtenue par le ramollissement des feuilles intercalaires 7 et 8 qui leur font face, et par la pression exercée lors de l'assemblage.

Dans le mode présenté deux feuilles intercalaires 7, 8 sont mises en œuvre. Il s'agit ici de faire en sorte que l'épaisseur totale des deux feuilles soit au moins égale, et de préférence un peu supérieure, à celle des diodes pour faciliter leur insertion dans ce matériau. Les feuilles intercalaires traditionnelles sont commercialisées en épaisseur standard notamment de 0,76mm et 0,38mm d'épaisseur. La combinaison présentée correspond par exemple à une épaisseur totale de 0,76+0,38 soit 1,14mm pour des diodes dont la hauteur sur le support 4 peut être d'environ 0,8mm.

Un mécanisme est susceptible d'altérer la qualité optique du vitrage. Comme décrit en détail dans la demande WO2009/050195, les matériaux intercalaires de type PVB qui renferment des ions notamment alcalins peuvent prendre une teinte brune au contact de circuits conducteurs de l'électricité à base d'oxydes. De plus cette altération peut s'accompagner d'une modification de la conductivité des couches en question. La publication mentionnée établit que ces altérations viennent de la présence d'une certaine teneur en ions monovalents, notamment des ions alcalins résiduels présents. Pour éviter ces inconvénients l'usage d'intercalaires renfermant des ions de plus grande dimensions, et donc moins mobiles, est proposée.

Pour cette raison il est préféré d'utiliser une feuille intercalaire 7 au contact de la couche conductrice 15 alimentant les diodes 14, d'un matériau répondant à ces caractéristiques. A titre indicatif un tel matériau est celui commercialisé sous le nom de TROSIFOL Solar par la société Kuraray.

En plus des éléments présents à la figure 1, une couche supplémentaire 34 peut être appliquée sur la feuille de verre 2 tournée vers l'intérieur, couche qui constitue un écran contre les modifications de champ qui ne seraient pas localisées à l'emplacement du capteur capacitif. Pour cela, la couche comme représentée est interrompue à cet emplacement en 35. Il est entendu que la couche peut être totalement interrompue par exemple par ablation totale d'une partie de la couche, comme indiqué à la figure 2 ou avantageusement, la couche peut être interrompue partiellement de manière à isoler électriquement et physiquement une zone de la couche à l'emplacement 35 vis-à-vis du reste de la couche 34. Ainsi, un cercle délimitant cette zone peut être dessinée à l'aide d'un laser. Le trait laser de ce cercle sera avantageusement plus discret que l'ablation totale de la couche car ce trait laser présente une largeur de 100 *µ*m. Comme précédemment cette couche est conductrice et est avantageusement mise à la masse et est transparente. Si cette couche est sur la face de la feuille 2 tournée vers l'habitacle, elle est choisie avantageusement suffisamment dure. Une telle couche est par exemple d'oxyde d'étain dopé.

Avantageusement, la couche 34 est une (ou plusieurs) couche(s) low-e basse-émissive afin de minimiser la déperdition de chaleur, des couches low-e couche basse-émissive) peuvent être appliquées sur la face de la feuille 2 tournée vers l'habitacle. Dans la désignation traditionnelle des faces des vitrages feuilletés il s'agit de la position 4. Les couches en question font office de filtre réfléchissant sélectivement les rayons infrarouge lointains émis depuis l'habitacle, sans constituer un obstacle important à la transmission des rayons du domaine visible de l'extérieur vers l'intérieur.

La présence de couches minces en position 4 est choisie en dépit du fait que dans cette position les couches ne sont pas protégées contre des altérations notamment mécaniques. Il est possible de choisir des couches low-e qui offrent une résistance mécanique et chimique suffisante.

Avantageusement, compte tenu de l'importance de disposer de revêtements de bonne résistance mécanique, on choisit des couches dites «dures», telles que celles produites par des techniques de type pyrolytique, CVD ou PECVD. Mais des systèmes low-e peuvent aussi être préparés par les techniques de pulvérisation cathodique sous vide, à condition que ces systèmes soient protégés par des couches suffisamment résistantes.

Selon l'invention, il est préféré d'utiliser un système de couches basse-émissives, dont l'émissivité est inférieure à 0,3 et de préférence inférieure à 0,2, et de façon particulièrement préférée inférieure à 0,1.

Les systèmes "low-e" (bas-émissifs) pyrolytiques les plus usuels comportent une couche d'oxyde d'étain dopé déposée sur une première couche ayant pour rôle de neutraliser la couleur en réflexion. La couche au contact du verre est ordinairement une couche de silice ou d'oxy-carbure de silicium, éventuellement modifiée par des additifs. Les couches d'oxyde d'étain comparées aux couches des systèmes déposés par pulvérisation cathodique, sont relativement épaisses, plus de 200nm, et pour certaines plus de 450nm. Ces couches épaisses sont suffisamment résistantes pour supporter d'être exposées à des épreuves mécaniques et/ou chimiques.

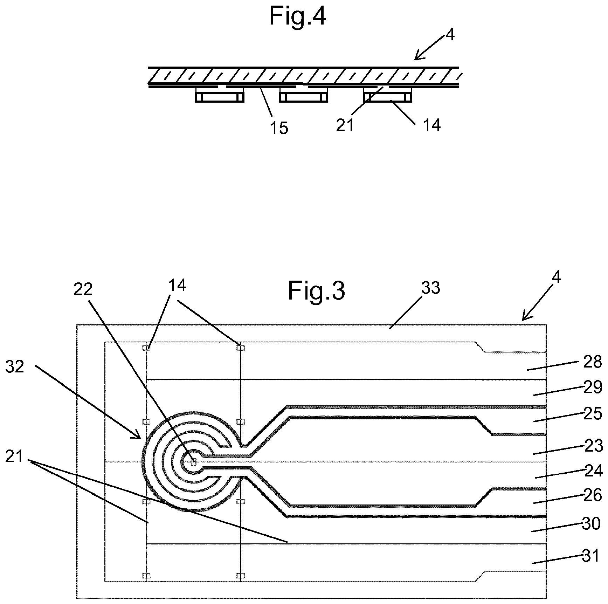

La figure 3 illustre de manière schématique la disposition des diodes 14 sur le support 4 constitué par la lame de verre. Dans le cas présent la lame de verre de 0,40mm d'épaisseur est revêtue d'une couche conductrice d'ITO 15.

La couche conductrice 15 est découpée de manière à constituer le circuit d'alimentation des diodes 14. Les diodes sont collées à cette couche. Elles sont rassemblées sur une surface limitée pour conduire à un faisceau concentré de puissance lumineuse suffisante. Le circuit conducteur est constitué de manière à séparer les pôles d'alimentation, chaque diode étant collée à chacun des deux pôles.

Un circuit schématique est par exemple présenté à la figure 3. La lame 4 vue de dessus, comporte une couche conductrice qui est appliquée sur la majeure partie de la lame. La couche est divisée par des traits d'ablation de la couche conductrice, tels que ceux référencés 21, pour constituer le circuit d'alimentation des diodes 14. La couche est en deux parties symétriques couvrant une large surface pour limiter le plus possible la chaleur produite dans cette couche par effet Joule. Les dimensions des surfaces de ces conducteurs sont déterminées également de manière à garantir un courant d'alimentation pratiquement identique pour chacune des diodes 14. Celles-ci sont groupées en deux séries de quatre diodes chacune disposées de façon symétrique. Les diodes d'une série sont alimentées en «série» le long de ces conducteurs dont les extrémités respectivement 28, 29 et 30 31 correspondant aux deux pôles d'alimentation (+, -).

Pour former le circuit la couche 15 s'étend initialement de manière uniforme sur toute la surface de la feuille de verre 4 avec éventuellement des bords non revêtus. La séparation des différentes zones dans cette couche est obtenue selon des lignes 21, tracées dans cette couche par exemple par ablation au moyen d'un laser par des méthodes antérieures connues. La largeur de l'ablation est limitée à ce qui est nécessaire pour garantir que les zones sont bien isolées électriquement les unes des autres. La figure 4 illustre de manière schématique la disposition des diodes 14 par rapport aux traits d'ablation de type 21 de la couche conductrice 15.

La distribution des diodes est faite en sorte de répartir le mieux possible la chaleur produite en cours de fonctionnement. Les diodes sont espacées les unes des autres, mais à distance limitée par la nécessité de rassembler l'émission lumineuse résultante. Dans l'exemple les diodes sont disposées en lignes et distantes les unes des autres de 3cm environ.

A titre d'exemple la couche conductrice est une couche ITO («indium tin oxide») de 150nm d'épaisseur et 10Ω/□ de résistance. La couche ITO est intéressante notamment en raison de sa neutralité de couleur et de sa transparence. Elle ne modifie pas sensiblement l'aspect notamment en transmission, contrairement aux couches à base d'étain dopé.

L'alimentation des diodes est sous tension de 14V par exemple de 25mA.

La figure 3 présente aussi un capteur 32 comprenant deux électrodes concentriques, chacune comprenant deux secteurs de forme générale annulaire, reliées respectivement à des conducteurs 25, 26. Le diamètre de l'emplacement correspondant aux électrodes est d'environ 4,5cm pour une largeur de la lame 4 d'environ 12cm.

Les électrodes et leurs conducteurs sont également réalisés dans la couche conductrice découpée comme le circuit d'alimentation des diodes. Les conducteurs 25, 26 sont reliées à un ensemble de traitement commandant l'interrupteur des diodes 14. Les conducteurs 25, 26 entre les électrodes annulaires et les extrémités de jonction avec le dispositif d'alimentation et de traitement des signaux, sont écartés l'un de l'autre d'une distance d qui est de l'ordre de la dimension du capteur 32.

Le mode de fonctionnement est celui décrit précédemment. La fréquence d'analyse de la charge des électrodes est fixée à 33Hz. Le mouvement de l'opérateur à proximité du capteur 32, déclenche l'interrupteur des diodes. Le cas échéant le circuit de façon connue peut aussi comprendre un variateur («dimmer») conduisant à différents niveaux d'alimentation pour un éclairage d'intensité variée, chaque impulsion ou la longueur de l'impulsion faisant passer d'un niveau à un autre.

La distance d séparant les conducteurs 25 et 26, évite les déclenchements lors d'une approche hors de la zone efficace des électrodes du capteur 32 quand un écran du type de la couche 34 de la figure 2 n'est pas présent. Pour améliorer encore le rapport «signal/ bruit» une bande périphérique 33 de la couche conductrice est mise à la terre.

La lame de verre 4 dans l'exemple présenté, comprend encore une diode 22 dont le rôle est d'indiquer l'emplacement de l'électrode de commande. Cette diode est de très faible puissance comparée à celle des diodes 14 de la liseuse. La diode 22 est alimentée par des conducteurs 23, 24 découpés dans la couche conductrice 15.

La figure 5 analogue à la figure 1 montre les composants d'un vitrage comportant un autre ensemble fonctionnel. Les mêmes références désignent les mêmes éléments.

L'ensemble fonctionnel est ici constitué par un film 3 commandant la transmission lumineuse. Le film 3 est de type électro-commandé. Il s'agit comme indiqué précédemment par exemple d'électro-chrome, de SPD ou de film à cristaux liquides. Pour l'intégration et la protection du film 3 il est avantageux de le disposer dans un cadre 36 constitué dans une feuille intercalaire. Tous ces films présentent en commun le fait de disposer le matériau réactif entre deux couches conductrices qui recouvrent les deux faces. Ces éléments conducteurs constituent des écrans pour le capteur capacitif disposé sur le support 4 de telle sorte que le déclenchement ne peut se faire que du côté opposé à ces écrans. Pour un toit automobile ce côté est celui tourné vers l'intérieur du véhicule, autrement dit, sous la feuille de verre 2. Par ailleurs les ensembles fonctionnels indiqués sont protégés habituellement des infrarouges par le filtre 11 qui ajoute à cette fonction d'écran.

Dans le mode représenté aux figures 5 et 6, le support 4 présente un capteur constitué dans une couche conductrice 15, et, éventuellement, une diode 22 de positionnement.

Le support 4, en particulier si il ne comporte pas de diode 22 est avantageusement très peu épais. Un simple film PET de quelques centièmes de millimètre peut suffire. Ces films revêtus de couches conductrices, notamment comportant un système de couches comportant des couches d'argent métallique, sont disponibles dans le commerce. L'avantage de l'utilisation de ces films est qu'ils sont insérables dans le feuilleté sans précautions particulières concernant leur épaisseur. Le cas échéant la présence de la diode 22 n'interdit pas l'usage d'un tel support. Il convient néanmoins dans ce cas de conserver un ou plusieurs intercalaires dont un rôle est de pouvoir recevoir cette diode 22.

Les exemples des figures 1 et 2 d'une part, et 5 et 6 d'autre part, n'ont évidemment pour but que d'illustrer l'invention, qui peut revêtir de multiples configurations. Les ensembles fonctionnels sont notamment ceux dont les exemples sont indiqués, mais d'autres ensembles peuvent aussi être commandés, notamment des couches chauffantes incluses dans le vitrage. Par ailleurs, comme indiqué les vitrages considérés peuvent inclure plusieurs ensembles fonctionnels. C'est la cas par exemple d'un vitrage comportant simultanément des moyens d'éclairage et des films commandant la transmission lumineuse, chacun séparément comprenant des capteurs constituant les interrupteurs respectifs.

## Revendications

1. Vitrage de véhicule automobile comprenant deux feuilles de verre externe et interne réunies au moyen d'une ou plusieurs feuilles intercalaires thermoplastiques, au moins un ensemble fonctionnel alimenté électriquement étant inséré entre les feuilles du vitrage, un capteur capacitif commandant l'alimentation de l'ensemble fonctionnel par le biais d'une unité de traitement des signaux émis par le capteur, le capteur étant également inséré dans le vitrage sur un support transparent revêtu d'une couche conductrice également transparente, couche dans laquelle le capteur est constitué **caractérisé en ce que** le capteur capacitif comprend deux électrodes constituées dans la couche conductrice, les signaux émanant de chaque électrode conduisant à une analyse par l'unité de traitement **et en ce que** les électrodes définissant le capteur, se prolongent sur le support par des conducteurs également constitués dans la couche conductrice, ces conducteurs étant à une distance d l'un de l'autre qui est de l'ordre de la plus grande dimension de la surface couverte par les électrodes .

2. Vitrage selon la revendication 1, dans lequel les électrodes sont imbriquées l'une dans l'autre de manière à maximiser leur interface pour une surface donnée de ces électrodes.

3. Vitrage selon l'une des revendications précédentes dans lequel la surface des électrodes constituant le capteur est au plus de 0,5dm² et de préférence d'au plus 0,25dm².

4. Vitrage selon l'une des revendications précédentes comportant en outre un écran conducteur essentiellement transparent situé d'un côté du support, écran masquant les électrodes aux influences extérieures localisées de ce côté.

5. Vitrage selon l'une des revendications précédentes dans lequel la couche conductrice dans laquelle le capteur est constitué, comporte à sa périphérie une zone entourant le capteur et connecté à la masse,

6. Vitrage selon l'une des revendications précédentes dans lequel la position des électrodes dans le vitrage est indiquée par la présence d'une diode portée par le support des électrodes, et alimentée par des conducteurs constitués dans la même couche dans laquelle les électrodes sont constituées.

7. Vitrage selon l'une des revendications précédentes dans lequel les matériaux et épaisseurs du support d'une part, et de la couche conductrice d'autre part, sont choisis de telle sorte que leur transmission dans le domaine des longueurs d'onde du visible, selon la norme EN 410, ne soit pas inférieure à 80% et de préférence pas inférieure à 85%.

8. Vitrage selon l'une des revendications précédentes dans lequel la couche conductrice présente une résistance qui n'est pas supérieure à 50Ω/□ et de préférence pas supérieure à 30Ω/□.

9. Vitrage selon l'une des revendications précédentes dans lequel l'élément fonctionnel est un élément modifiant la transmission lumineuse du vitrage et est constitué d'un film de type SPD (suspended particles device).

10. Vitrage selon l'une des revendications 1 à 8 dans lequel l'élément fonctionnel est un élément modifiant la transmission lumineuse du vitrage et est constitué d'un film de type LC (cristaux liquides).

11. Vitrage selon l'une des revendications 1 à 8 dans lequel l'élément fonctionnel est constitué par un ensemble de diodes électroluminescentes, lesquelles sont également portées par le support et alimentées par la couche conductrice.

12. Vitrage selon la revendication 11 dans lequel la couche conductrice est une couche d'oxyde mince conductrice (TCO).

13. Vitrage selon la revendication 12 dans lequel la couche conductrice est une couche d'oxyde d'indium dopée à l'étain (ITO).

14. Vitrage selon l'une des revendications précédentes dans lequel le support est constitué d'une lame de verre dont l'épaisseur n'est pas supérieure à 0,8mm, et de préférence pas supérieure à 0,5mm.

15. Procédé de commande d'un vitrage selon l'une des revendications 1 à 13 dans lequel chaque électrode alternativement selon une fréquence donnée est l'objet d'une détermination de capacité, la variation de capacité mesurée des deux électrodes constituant les signaux déterminant la commande de l'interrupteur au-delà d'un seuil choisi.

16. Procédé selon la revendication 15, dans lequel la fréquence de détermination des capacités est d'au moins de 1 à 100Hz et de préférence de 10 à 50Hz.

17. Procédé selon l'une des revendications 15 ou 16 dans lequel le seuil de commande de l'interrupteur est choisi tel que le rapport signal/bruit soit au moins de 3, et de préférence au moins de 5.

## Patentansprüche

1. Kraftfahrzeugverglasung, welche zwei Glasscheiben, eine äußere und eine innere, die mittels einer oder mehrerer thermoplastischer Zwischenschichtfolien vereinigt sind, umfasst, wobei wenigstens eine elektrisch betriebene Funktionseinheit zwischen die Scheiben der Verglasung eingefügt ist, wobei ein kapazitiver Sensor die Stromversorgung der Funktionseinheit über eine Verarbeitungseinheit für die von dem Sensor gesendeten Signale steuert, wobei der Sensor auf einem transparenten Träger, der mit einer ebenfalls transparenten leitfähigen Schicht überzogen ist, ebenfalls in die Verglasung eingefügt ist, wobei in dieser Schicht der Sensor ausgebildet ist, **dadurch gekennzeichnet, dass** der kapazitive Sensor zwei Elektroden umfasst, die in der leitfähigen Schicht ausgebildet sind, wobei die von jeder Elektrode ausgehenden Signale zu einer Analyse durch die Verarbeitungseinheit führen, und dadurch, dass die Elektroden, die den Sensor definieren, auf dem Träger durch Leiter verlängert sind, die ebenfalls in der leitfähigen Schicht ausgebildet sind, wobei diese Leiter einen Abstand d voneinander aufweisen, welcher in der Größenordnung der größten Abmessung der von den Elektroden bedeckten Fläche liegt.

2. Verglasung nach Anspruch 1, wobei die Elektroden so ineinander verschachtelt sind, dass ihre Grenzfläche für eine gegebene Oberfläche dieser Elektroden maximiert wird.

3. Verglasung nach einem der vorhergehenden Ansprüche, wobei die Oberfläche der Elektroden, die den Sensor bilden, höchstens 0,5 dm² und vorzugsweise höchstens 0,25 dm² beträgt.

4. Verglasung nach einem der vorhergehenden Ansprüche, welche außerdem einen im Wesentlichen transparenten leitfähigen Schirm aufweist, der sich auf einer Seite des Trägers befindet, wobei der Schirm die Elektroden gegenüber den auf dieser Seite einwirkenden äußeren Einflüssen abschirmt.

5. Verglasung nach einem der vorhergehenden Ansprüche, wobei die leitfähige Schicht, in welcher der Sensor ausgebildet ist, an ihrem Umfang einen Bereich aufweist, der den Sensor umgibt und mit Masse verbunden ist.

6. Verglasung nach einem der vorhergehenden Ansprüche, wobei die Position der Elektroden in der Verglasung durch das Vorhandensein einer Diode angezeigt wird, die vom Träger der Elektroden getragen wird und von Leitern mit Strom versorgt wird, die in derselben Schicht ausgebildet sind, in welcher die Elektroden ausgebildet sind.

7. Verglasung nach einem der vorhergehenden Ansprüche, wobei die Materialien und Dicken des Trägers einerseits und der leitfähigen Schicht andererseits derart gewählt sind, dass ihre Transmission im Bereich der Wellenlängen des sichtbaren Lichts gemäß der Norm EN 410 nicht kleiner als 80 % und vorzugsweise nicht kleiner als 85 % ist.

8. Verglasung nach einem der vorhergehenden Ansprüche, wobei die leitfähige Schicht einen Widerstand aufweist, welcher nicht höher als 50 Ω/□ und vorzugsweise nicht höher als 30 Ω/□ ist.

9. Verglasung nach einem der vorhergehenden Ansprüche, wobei das Funktionselement ein Element ist, das die Lichtdurchlässigkeit der Verglasung verändert, und aus einem SPD-Film (Suspended Particles Device Film) besteht.

10. Verglasung nach einem der Ansprüche 1 bis 8, wobei das Funktionselement ein Element ist, das die Lichtdurchlässigkeit der Verglasung verändert, und aus einem LC-Film (Flüssigkristallfilm) besteht.

11. Verglasung nach einem der Ansprüche 1 bis 8, wobei das Funktionselement aus einer Anordnung von Leuchtdioden besteht, welche ebenfalls von dem Träger getragen und von der leitfähigen Schicht mit Strom versorgt werden.

12. Verglasung nach Anspruch 11, wobei die leitfähige Schicht eine leitfähige Oxiddünnschicht (TCO-Schicht) ist.

13. Verglasung nach Anspruch 12, wobei die leitfähige Schicht eine mit Zinn dotierte Indiumoxidschicht (ITO-Schicht) ist.

14. Verglasung nach einem der vorhergehenden Ansprüche, wobei der Träger aus einer Glasplatte besteht, deren Dicke nicht größer als 0,8 mm und vorzugsweise nicht größer als 0,5 mm ist.

15. Verfahren zur Steuerung einer Verglasung nach einem der Ansprüche 1 bis 13, wobei die beiden Elektroden abwechselnd mit einer gegebenen Häufigkeit Gegenstand einer Kapazitätsbestimmung sind, wobei die gemessene Kapazitätsänderung der beiden Elektroden die Signale bildet, welche bei Überschreitung eines gewählten Schwellenwertes die Ansteuerung des Schalters bestimmen.

16. Verfahren nach Anspruch 15, wobei die Häufigkeit der Bestimmung der Kapazitäten mindestens 1 bis 100 Hz und vorzugsweise 10 bis 50 Hz beträgt.

17. Verfahren nach einem der Ansprüche 15 oder 16, wobei der Schwellenwert für die Ansteuerung des Schalters so gewählt wird, dass das Signal-RauschVerhältnis mindestens 3 und vorzugsweise mindestens 5 beträgt.

## Claims

1. Motor vehicle glazing comprising two external and internal glass sheets joined by means of one or more thermoplastic interlayer sheets, at least one electrically supplied functional assembly being inserted between the sheets of the glazing, a capacitive sensor controlling the supply of the functional assembly via a unit for processing the signals emitted by the sensor, the sensor also being inserted into the glazing on a transparent support coated with a conductive layer which is also transparent, in which layer the sensor is formed, **characterized in that** the capacitive sensor comprises two electrodes formed in the conductive layer, the signals emanating from each electrode resulting in an analysis by the processing unit, **and in that** the electrodes defining the sensor are extended over the support by conductors also formed in the conductive layer, these conductors being at a distance d from one another which is of the order of the greatest dimension of the area covered by the electrodes.

2. Glazing according to Claim 1, in which the electrodes are interwoven with one another so as to maximize their interface for a given area of these electrodes.

3. Glazing according to either of the preceding claims, in which the area of the electrodes constituting the sensor is at most 0.5 dm² and preferably at most 0.25 dm².

4. Glazing according to one of the preceding claims, additionally comprising an essentially transparent conductive screen situated on one side of the support, which screen masks the electrodes from external influences located on this side.

5. Glazing according to one of the preceding claims, in which the conductive layer in which the sensor is formed comprises, at its periphery, a region surrounding the sensor and connected to earth.

6. Glazing according to one of the preceding claims, in which the position of the electrodes in the glazing is shown by the presence of a diode carried by the support of the electrodes and supplied by conductors formed in the same layer in which the electrodes are formed.

7. Glazing according to one of the preceding claims, in which the materials and thicknesses of the support, on the one hand, and of the conductive layer, on the other hand, are chosen so that their transmission in the domain of the visible wavelengths, according to standard EN 410, is not less than 80% and preferably not less than 85%.

8. Glazing according to one of the preceding claims, in which the conductive layer exhibits a resistance which is not greater than 50 Q/□ and preferably not greater than 30 Ω/□.

9. Glazing according to one of the preceding claims, in which the functional element is an element which modifies the light transmission of the glazing and consists of a film of SPD (suspended particle device) type.

10. Glazing according to one of Claims 1 to 8, in which the functional element is an element which modifies the light transmission of the glazing and consists of a film of LC (liquid crystal) type.

11. Glazing according to one of Claims 1 to 8, in which the functional element consists of an assembly of light-emitting diodes, which diodes are also carried by the support and supplied by the conductive layer.

12. Glazing according to Claim 11, in which the conductive layer is a thin layer of conductive oxide (TCO) .

13. Glazing according to Claim 12, in which the conductive layer is a layer of indium oxide doped with tin (ITO).

14. Glazing according to one of the preceding claims, in which the support consists of a glass slide, the thickness of which is not greater than 0.8 mm and preferably not greater than 0.5 mm.

15. Process for controlling a glazing according to one of Claims 1 to 13, in which each electrode alternatively, at a given frequency, is the subject of a determination of capacitance, the variation in capacitance measured for the two electrodes constituting the signals determining the control of the switch beyond a chosen threshold.

16. Process according to Claim 15, in which the frequency of determination of the capacitances is at least from 1 to 100 Hz and preferably from 10 to 50 Hz.

17. Process according to either of Claims 15 and 16, in which the threshold for controlling the switch is chosen such that the signal/noise ratio is at least 3 and preferably at least 5.
